# EUROPÄISCHE PATENTSCHRIFT

(11) **EP 3 554 819 B1**
(45) Veröffentlichungstag und Bekanntmachung des Hinweises auf die Patenterteilung: **16.09.2020**
(21) Anmeldenummer: 17787917.8
(22) Anmeldetag: 24.10.2017
(51) Int. Cl.: B29D 30/52, B60C 11/02, B29D 30/56

(54) **LAUFSTREIFEN FÜR DIE KALTRUNDERNEUERUNG EINES NUTZFAHRZEUGREIFENS UND NUTZFAHRZEUGREIFEN**
TREAD FOR COLD-RETREADING A UTILITY VEHICLE TIRE AND TIRE OF SUCH A VEHICLE
BANDE DE ROULMENT POUR RECHAPER A FROID UN PNEUMATIQUE D'UN VEHICULE UTILITAIRE ET PNEUMATIQUE D'UN VEHICULE UTILITAIRE

(30) Priorität: 19.12.2016 DE 102016225428
(43) Veröffentlichungstag der Anmeldung: 23.10.2019
(73) Patentinhaber: Continental Reifen Deutschland GmbH, 30165 Hannover (DE)
(72) Erfinder: LUTZ, André, 30167 Hannover (DE); PIKNA, Michal, 911101 Trencin (SK)
(74) Vertreter: Finger, Karsten
(86) Internationale Anmeldenummer: PCT/EP2017/077042
(87) Internationale Veröffentlichungsnummer: WO 2018/114095

(56) Entgegenhaltungen:
- EP-A2- 0 403 443
- JP-A- H05 154 941
- US-A- 4 258 776

## Beschreibung

Die Erfindung betrifft einen vulkanisierten oder vorvulkanisierten profilierten Laufstreifen für die Kaltrunderneuerung eines Nutzfahrzeugreifens, wobei der Laufstreifen, im Querschnitt betrachtet, eine entlang der Laufstreifenperipherie verlaufende gekrümmte äußere Konturlinie und eine entlang der Laufstreifeninnenseite verlaufende gekrümmte innere Konturlinie aufweist, wobei die Konturlinien symmetrisch zur Mittelebene des Laufstreifens verlaufen sowie, im Querschnitt des Laufstreifens betrachtet, parallel zueinander verlaufen und sich jeweils aus Kreisbögen mit zumindest zwei unterschiedlichen Radien zusammensetzen - einem durch die Mittelebene verlaufenden zentralen Kreisbogen und zwei randseitigen Kreisbögen - wobei der zentrale Kreisbogen den größten Radius aufweist und wobei der Laufstreifen auf einen gemäß der inneren Konturlinie abgerauten Nutzfahrzeugreifen aufgebracht wird.

Ein derartiger gattungsbildender Laufstreifen ist beispielsweise aus der US 4 258 776 A bekannt. Die äußere und innere Konturlinie des Laufstreifens setzt sich jeweils aus Kreisbögen mit zwei unterschiedlichen Radien zusammen - einem durch die Mittelebene verlaufenden zentralen Kreisbogen und zwei randseitigen Kreisbögen. Der zentrale Kreisbogen weist einen Radius auf, welcher das 1,25- bis 4,0-Fache des Radius der randseitigen Kreisbögen beträgt.

Aus der JP H05 154 941 A sind ein weiterer für die Runderneuerung vorgesehener Laufstreifen und ein Verfahren zur Runderneuerung offenbart. Beim Verfahren wird der Reifeninnendruck vorübergehend auf 30% des vorgesehenen Reifenfülldruckes abgesenkt.

Ferner ist aus der EP 0 492 048 B1 ein Laufstreifen bekannt, bei welchem, im Querschnitt des Laufstreifens betrachtet, die innere Konturlinie des Laufstreifens im Wesentlichen entlang eines einzigen Radius von 50,8 cm bis 81,28 cm verläuft. Die äußere Konturlinie verläuft ebenfalls entlang eines einzigen Radius, welcher größer ist als der Radius der inneren Konturlinie.

Die Runderneuerung von Nutzfahrzeugreifen ist nach wie vor weit verbreitet, wobei vorrangig die Runderneuerung im Kaltverfahren angewendet wird. Beim Kaltverfahren wird der abgefahrene Laufstreifen durch Abrauen abgetragen, sodass die abgeraute Reifenkarkasse eine gekrümmte Außenkontur aufweist. Üblicherweise werden zur Kaltrunderneuerung vorgesehene Laufstreifen in einer Länge von bis zu 10 m in einer Vulkanisierpressanlage vor- oder ausvulkanisiert. Diese Laufstreifen sind zwar profiliert, ihre Innen- und Außenseiten sind jedoch ansonsten eben. Beim Auflegen eines solchen Laufstreifens auf die abgeraute Reifenkarkasse "klappen" die an schulterseitige bzw. randseitige Umfangsrillen außen anschließende Randabschnitte des Laufstreifens axial etwas auseinander, wodurch sich die schulterseitige Umfangsrillen in unerwünschter Weise "öffnen". Der mittlere Bereich des Laufstreifens wird oft beim Auflegen auf die Reifenkarkasse zusammengedrückt, sodass sich die dort verlaufenden Umfangsrillen in unerwünschter Weise etwas "schließen". Dese Effekte treten auch bei Laufstreifen auf, die gemäß der Lehre der eingangs erwähnten EP 0 492 048 B1 ausgeführt sind. Der am runderneuerten Nutzfahrzeugreifen aufgebrachte Laufstreifen weist somit nicht die Außenkontur des ursprünglichen Laufstreifens auf, was die Fahreigenschaften des Nutzfahrzeugreifens negativ beeinflussen kann. Ungünstiger Weise werden durch das erwähnte "Öffnen" und "Schließen" der Umfangsrillen Spannungen im Bereich der Rillengründe der Umfangsrillen erzeugt, wodurch beim Fahren das Entstehen von Rissen ("groove cracks") in diesen Bereichen begünstigt wird, insbesondere bei Laufstreifen aus etwas härteren Gummimischungen. Diese Risse verringern die Lebensdauer des neuen Laufstreifens.

Der Erfindung liegt daher die Aufgabe zugrunde, die Haltbarkeit eines Laufstreifens der eingangs genannten Art zu erhöhen.

Die gestellte Aufgabe wird erfindungsgemäß dadurch gelöst, dass sich die Konturlinien, im Querschnitt des Laufstreifens betrachtet, jeweils aus Kreisbögen mit drei oder vier unterschiedlichen Radien zusammensetzen, wobei die zwischen dem zentralen Kreisbogen und den randseitigen Kreisbögen verlaufende Kreisbögen einen bzw. jeweils einen Radius aufweisen, welcher kleiner ist als der Radius der randseitigen Kreisbögen und mindestens 100 mm beträgt.

Gemäß der Erfindung sind die äußere und innere Konturlinie des Laufstreifens speziell ausgelegt. Vor dem Abrauen des zu runderneuernden Nutzfahrzeugreifens wird üblicherweise der Reifeninnendruck aus Sicherheitsgründen auf etwa 2 bar verringert. Nach dem Auflegen des neuen Laufstreifens auf die Reifenkarkasse und Verbinden desselben mit der Reifenkarkasse wird der Reifendruck wieder erhöht, üblicherweise auf 7,5 bar bis 9,0 bar. Diese Drückerhöhung geht mit einer Veränderung der Außen- und Innenkontur des Reifens einher, wobei aufgrund der über den Reifenquerschnitt inhomogenen Steifigkeit des unterhalb des Laufstreifens befindlichen Gürtelpaketes diese Veränderung im mittleren Laufstreifenbereich von jener in den Reifenschultern abweicht. Bei den bislang üblichen und aus dem Stand der Technik bekannten Laufstreifen öffnen und schließen sich bei der Druckerhöhung die im Laufstreifen befindlichen Umfangsrillen in Abhängigkeit von ihrer axialen Position in unterschiedlichem Ausmaß. Mit einem erfindungsgemäßen Laufstreifen können diese negativen Effekte kompensiert werden. Dies gelingt durch die parallel zueinander verlaufenden Konturen der Außen- und Innenseite des Laufstreifens sowie durch die spezielle durch Kreisbögen unterschiedlicher Radien vorgegebene Krümmung dieser Konturen und ferner dadurch, dass der Nutzfahrzeugreifen derart abgeraut ist, dass seine Außenkontur der Innen- und Außenkontur des Laufstreifens gemäß der Erfindung entspricht. Ein gemäß der Erfindung runderneuerter Nutzfahrzeugreifen weist einen Laufstreifen auf, bei welchem kaum mehr Risse an den Rillengründen auftreten, sodass der neue Laufstreifen bzw. der damit runderneuerte Nutzfahrzeugreifen eine deutlich höhere Haltbarkeit als die bisher bekannten Laufstreifen bzw. die in bekannter Weise runderneuerten Nutzfahrzeugreifen aufweist. Es können daher auch Laufstreifen aus einem härteren und abriebbeständigeren Gummimaterial zur Runderneuerung eingesetzt werden.

Die beiden parallel zueinander verlaufenden Konturlinien werden aus drei oder aus vier Kreisbögen zusammengesetzt, so dass eine möglichst optimale Anpassung der Außen- und der Innenkontur des zur Erneuerung vorgesehenen Laufstreifens an den ursprünglich vorhandenen Laufstreifen möglich ist.

Gemäß einer bevorzugten Ausführungsform der Erfindung beträgt der Radius des zentralen Kreisbogens 500 mm bis 10.000 mm, der Radius der randseitigen Kreisbögen mindestens 100 mm. Nachdem der Radius der randseitigen Kreisbögen kleiner ist als der Radius des zentralen Kreisbogens kann auf diese Weise der Laufstreifen mit einer Außen- und Innenkontur erstellt werden, die der ursprünglichen Laufstreifenkontur am Fahrzeugluftreifen möglichst nahe kommt.

Die Größe der einzelnen Radien der Kreisbögen und die Länge der Kreisbögen wird vorzugsweise derart gewählt, dass die Kreisbögen knickfrei aneinander anschließen.

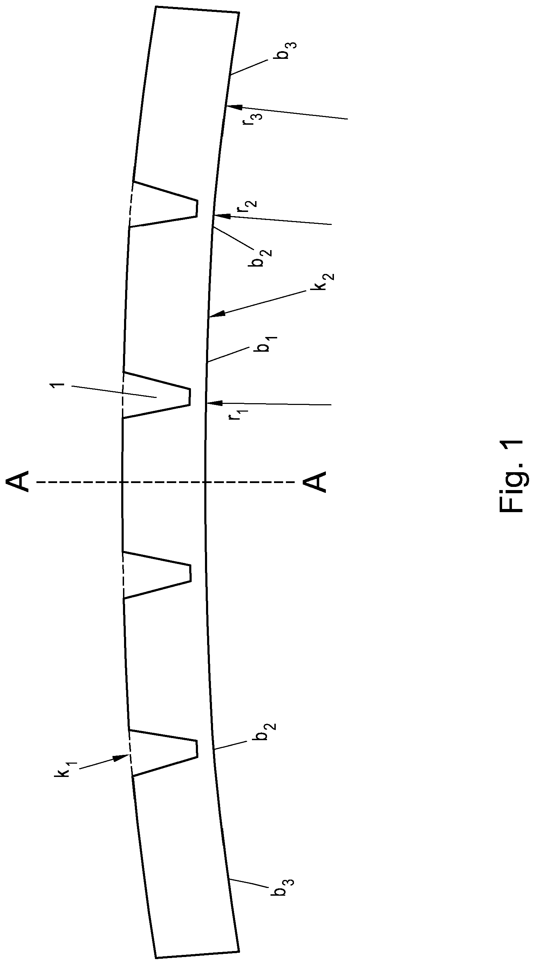

Weitere Merkmale, Vorteile und Einzelheiten der Erfindung werden nun anhand der einzigen Figur, Fig. 1, die einen schematischen Querschnitt durch eine Ausführungsvariante eines für eine Kaltrunderneuerung vorgesehenen Laufstreifens eines Nutzfahrzeugreifens zeigt, näher beschrieben.

Bei Kaltrunderneuerungsverfahren wird der abgefahrene Laufstreifen bis zur Gürtelgummierung abgetragen, die Karkasse im abgetragenen Bereich angeraut, etwaige Schleifarbeiten und Reparaturen werden durchgeführt und es wird die Reifenkarkasse unter Verwendung einer unvulkanisierten Bindegummischicht mit einem neuen profilierten und bereits vulkanisierten oder vorvulkanisierten Laufstreifen bei einer Temperatur zwischen 95°C und 115°C unter Vulkanisieren des Bindegummis verbunden.

Der in Fig. 1 gezeigte Laufstreifen ist ausvulkanisiert oder vorvulkanisiert sowie mit einer Profilierung versehen, welche im dargestellten Beispiel vier Umfangsrillen 1 aufweist. Die im Querschnitt entlang der Laufstreifenperipherie vorliegende Außenkontur des Laufstreifens ist durch eine äußere Konturlinie k₁ angedeutet. Eine innere Konturlinie k₂ gibt die Innenkontur des Laufstreifens im Querschnitt wieder. Die äußere Konturlinie k₁ und die innere Konturlinie k₂ weisen übereinstimmende Krümmungen auf und verlaufen parallel zueinander. Die Linie A-A kennzeichnet die Mittelebene des Laufstreifens, welche bei am Nutzfahrzeugreifen positionierten Laufstreifen der Äquatorialebene des Reifens entspricht.

Die Konturlinien k₁, k₂, verlaufen bei der dargestellten Ausführung, im Querschnitt des Laufstreifens betrachtet, symmetrisch zur Mittelebene des Laufstreifens sowie jeweils entlang von Kreisbögen b₁, b₂, b₃ mit drei unterschiedlichen Radien r₁, r₂, r₃ - einem zentralen, über die Mittelebene verlaufenden Kreisbogen b₁ mit dem Radius r₁, zwei an diesen anschließenden Kreisbögen b₂ mit dem Radius r₂ und zwei randseitigen Kreisbögen b₃ mit dem Radius r₃. Der Radius r₁ des zentralen Kreisbogens b₁ ist der größte Radius von allen Radien und beträgt 500 mm bis 10.000 mm. Der Radius r₂ der Kreisbögen b₂ ist kleiner als Radius r₃ der randseitigen Kreisbögen b₃. Die Radien r₂, r₃ der Kreisbögen b₂, b₃ betragen jeweils mindestens 100 mm.

Bei weiteren, nicht dargestellten Ausführungsvarianten verlaufen die beiden Konturlinien, im Querschnitt des Laufstreifens betrachtet, jeweils entlang von Kreisbögen mit zwei oder mit vier unterschiedlichen Radien. Der über die die Mittelebene verlaufende zentrale Kreisbogen weist jeweils den größten Radius von 500 mm bis 10.000 mm auf, der weitere Radius bzw. die weiteren Radien betragen mindestens 100 mm, wobei bei einer Ausführung mit vier Kreisbögen die beiden randseitigen Kreisbögen einen größeren Radius aufweisen als die zwischen dem zentralen Kreisbogen und den randseitigen Kreisbögen vorliegenden Kreisbögen.

Bei sämtlichen Ausführungsvarianten sind die Radien und die Längen der Kreisbögen vorzugsweise derart aneinander angepasst, dass die Kreisbögen, im Querschnitt des Laufstreifens betrachtet, knickfrei aneinander anschließen.

Der beschriebene Laufstreifen wird in einer zweiteiligen, aus Oberteil und Unterteil bestehenden Vulkanisationsform mit der beschriebene Außen- und Innenkontur vorvulkanisiert oder ausvulkanisiert. Der rundzuerneuernde Nutzfahrzeugreifen wird derart abgeraut, dass seine Außenkontur zumindest im Wesentlichen der jeweiligen und erfindungsgemäßen Innenkontur des Laufstreifens entspricht.

### Bezugsziffernliste

- 1: Umfangsrille
- A-A: Linie
- b₁, b₂, b₃: Kreisbogen
- k₁, k₂: Konturlinie
- r₁, r₂, r₃: Radius

## Patentansprüche

1. Vulkanisierter oder vorvulkanisierter profilierter Laufstreifen für die Kaltrunderneuerung eines Nutzfahrzeugreifens, wobei der Laufstreifen, im Querschnitt betrachtet, eine entlang der Laufstreifenperipherie verlaufende gekrümmte äußere Konturlinie (k₁) und eine entlang der Laufstreifeninnenseite verlaufende gekrümmte innere Konturlinie (k₂) aufweist, wobei die Konturlinien (k₁, k₂) symmetrisch zur Mittelebene des Laufstreifens verlaufen sowie, im Querschnitt des Laufstreifens betrachtet, parallel zueinander verlaufen und sich jeweils aus Kreisbögen (b₁, b₂, b₃) mit zumindest zwei unterschiedlichen Radien (r₁, r₂, r₃) zusammensetzen - einem durch die Mittelebene verlaufenden zentralen Kreisbogen (b₁) und zwei randseitigen Kreisbögen (b₃) - wobei der zentrale Kreisbogen (b₁) den größten Radius (r₁) aufweist und
wobei der Laufstreifen auf einen gemäß der inneren Konturlinie abgerauten Nutzfahrzeugreifen aufgebracht wird,
**dadurch gekennzeichnet,**
**dass** sich die Konturlinien (k₁, k₂), im Querschnitt des Laufstreifens betrachtet, jeweils aus Kreisbögen (b₁, b₂, b₃) mit drei oder vier unterschiedlichen Radien (r₁, r₂, r₃) zusammensetzen, wobei die zwischen dem zentralen Kreisbogen (b₁) und den randseitigen Kreisbögen (b₃) verlaufende Kreisbögen (b₂) einen bzw. jeweils einen Radius (r₂) aufweisen, welcher kleiner ist als der Radius (r₃) der randseitigen Kreisbögen (b₃) und mindestens 100 mm beträgt.

2. Laufstreifen nach Anspruch 1, **dadurch gekennzeichnet, dass** der Radius (r₁) des zentralen Kreisbogens (b₁) 500 mm bis 10.000 mm beträgt.

3. Laufstreifen nach Anspruch 1, **dadurch gekennzeichnet, dass** der Radius (r₃) der randseitigen Kreisbögen (b₃) mindestens 100 mm beträgt.

4. Laufstreifen nach einem der Ansprüche 1 bis 3, **dadurch gekennzeichnet, dass** die Kreisbögen (b₁, b₂, b₃) knickfrei aneinander anschließen.

5. Nutzfahrzeugreifen, welcher mit einem Laufstreifen gemäß einem oder mehreren der Ansprüche 1 bis 4 runderneuert worden ist.

## Claims

1. Vulcanized or prevulcanized profiled tread for the cold retreading of a commercial vehicle tyre, wherein the tyre tread, seen in cross section, has a curved outer contour line (k₁) extending along the tread periphery and a curved inner contour line (k₂) extending along the tread inner side, wherein the contour lines (k₁, k₂) extend symmetrically in relation to the centre plane of the tread and extend parallel to one another, seen in the cross section of the tread, and are in each case made up of arcs (b₁, b₂, b₃) with at least two different radii (r₁, r₂, r₃) - one central arc (b₁) extending through the centre plane and two peripheral arcs (b₃) - wherein the central arc (b₁) has the greatest radius (r₁) and wherein the tread is applied to a commercial vehicle tyre roughened according to the inner contour line,
**characterized**
**in that** the contour lines (k₁, k₂), seen in the cross section of the tread, are in each case made up of arcs (b₁, b₂, b₃) with three or four different radii (r₁, r₂, r₃), wherein the arcs (b₂) extending between the central arc (b₁) and the peripheral arcs (b₃) have a radius (r₂), or in each case a radius (r₂), which is smaller than the radius (r₃) of the peripheral arcs (b₃) and is at least 100 mm.

2. Tread according to Claim 1, **characterized in that** the radius (r₁) of the central arc (b₁) is 500 mm to 10 000 mm.

3. Tread according to Claim 1, **characterized in that** the radius (r₃) of the peripheral arcs (b₃) is at least 100 mm.

4. Tread according to one of Claims 1 to 3, **characterized in that** the arcs (b₁, b₂, b₃) adjoin one another without any kinks.

5. Commercial vehicle tyre which has been retreaded with a tread according to one or more of Claims 1 to 4.

## Revendications

1. Bande de roulement vulcanisée ou prévulcanisée pour le rechapage à froid d'un bandage de véhicule utilitaire, la bande de roulement, vue en coupe transversale, possédant une ligne de contour extérieure (k₁) curviligne qui suit un tracé le long de la périphérie de la bande de roulement et une ligne de contour intérieure (k₂) curviligne qui suit un tracé le long du côté intérieur de la bande de roulement, les lignes de contour (k₁, k₂) suivant un tracé symétrique par rapport au plan central de la bande de roulement et, vues en coupe transversale de la bande de roulement, suivant un tracé parallèle l'une à l'autre et se composant respectivement d'arcs de cercle (b₁, b₂, b₃) ayant au moins deux rayons (r₁, r₂, r₃) différents - un arc de cercle central (b₁) qui suit un tracé à travers le plan central et deux arcs de cercle côté bord (b₃) - l'arc de cercle central (b₁) possédant le rayon (r₁) le plus grand et la bande de roulement étant appliquée sur un bandage de véhicule utilitaire râpé selon la ligne de contour intérieure,
**caractérisée en ce**
**que** les lignes de contour (k₁, k₂), vues en coupe transversale de la bande de roulement, se composant respectivement d'arcs de cercle (b₁, b₂, b₃) ayant trois ou quatre rayons (r₁, r₂, r₃) différents, les arcs de cercle (b₂) qui suivent un tracé entre l'arc de cercle central (b₁) et les arcs de cercle côté bord (b₃) possédant un, respectivement possédant chacun un rayon (r₂) qui est inférieur au rayon (r₃) des arcs de cercle côté bord (b₃) et est au moins égal à 100 mm.

2. Bande de roulement selon la revendication 1, **caractérisée en ce que** le rayon (r₁) de l'arc de cercle central (b₁) est de 500 mm à 10 000 mm.

3. Bande de roulement selon la revendication 1, **caractérisée en ce que** le rayon (r₃) des arcs de cercle côté bord (b₃) et d'au moins 100 mm.

4. Bande de roulement selon l'une des revendications 1 à 3, **caractérisée en ce que** les arcs de cercle (b₁, b₂, b₃) se rattachent les uns aux autres sans pli.

5. Bandage de véhicule utilitaire, lequel a été rechapé avec une bande de roulement selon l'une des revendications 1 à 4.
